# EUROPÄISCHE PATENTANMELDUNG

(11) **EP 1 174 315 A2**
(43) Veröffentlichungstag der Anmeldung: **23.01.2002**
(21) Anmeldenummer: 01117890.2
(22) Anmeldetag: 23.07.2001
(51) Int. Cl.: B60S 1/04, B60S 1/34

(54) **Vorrichtung zum Abstützen von Kfz-Scheibenwischern**

(30) Priorität: 21.07.2000 DE 10035950
(71) Anmelder: Lösch, Günther, 85570 Markt Schwaben (DE); Petra, Elke, 85646 Anzing (DE)
(72) Erfinder: Lösch, Günther, 85570 Markt Schwaben (DE); Petra, Elke, 85646 Anzing (DE)
(74) Vertreter: Petra, Elke, Dipl.-Ing.

(57) **Zusammenfassung**

Es wird eine Vorrichtung zum Abstützen von Kfz-Scheibenwischem beschrieben, bei der über einen Abstützklotz, der auf der Windschutzscheibe oder Windschutzleiste aufsteht, den Scheibenwischer-Blatthalter in entlasteter Stellung hält. Wesentlich dabei ist, daß als Abstützklotz mindestens ein loser, von Hand zwischen Windschutzscheibe und Blatthalter einlegbarer Abstützbock (1) vorgesehen ist, der an seiner Oberseite mindestens einen horizontal bzw. parallel zur Auflageseite (3) herausragenden Abstützarm (4) zum Untergreifen des Blatthalters aufweist. Dabei ist der Abstand zwischen Oberseite des Abstützarmes (4) und Auflageseite (3) so gewählt, daß das Gummiblatt des Scheibenwischers so weit abgehoben ist, daß es die Unterlage nicht berührt. Dadurch wird ein Anfrieren bei Kälte und Ankleben bei Hitze des Scheibenwischergummis vermieden und so die Lebensdauer verlängert.

## Beschreibung

Die Erfindung betrifft eine Vorrichtung zum Abstützen des Scheibenwischers eines Kraftfahrzeugs gemäß Oberbegriff des Anspruchs 1, wie sie in Ruhestellung des Wischers, mit angehobenem Wischerblatt, Verwendung findet.

Wenn das Wischerblatt des Scheibenwischers im unteren Abschnitt der Windschutzscheibe angehalten wird, so wird das Gummiblatt des Wischers während des nach unten gerichteten Wischvorgangs gebogen und gegen die Windschutzscheibe oder eine Windschutzleiste gepresst, die entlang der unteren Umfangskante der Windschutzscheibe vorgesehen ist. Wird der Wischer angehalten, so wird das Gummiblatt dauernd verformt. Im Ruhezustand wird somit das Gummiblatt über lange Zeit hinweg an der unteren Umfangskante der Windschutzscheibe umgebogen. Kommen dann noch extreme Witterungsverhältnisse hinzu, also im Sommer große Hitze und im Winter Kälte mit Eis und Schnee, dann erhitzt sich im ersten Fall das Gummi sehr stark und kann an der Unterlage ankleben, bzw. friert im zweiten Fall an der Unterlage an. Bei Beginn eines nach oben erfolgenden, ersten Wischvorgangs wird der Scheibenwischer versuchen, das Gummiblatt in die umgekehrte Richtung zu wenden, mit der Folge, daß das Gummiblatt beschädigt wird. Zudem wird durch den direkten, angepressten Kontakt mit der Unterlage, durch die harten Witterungseinflüsse, auch das Material des Gummiblattes eine versprödende Beeinflussung erfahren, so daß dessen Elastizität erheblich nachlässt und das gesamte Wischerblatt wertlos wird. Insbesondere dann, wenn die Windschutzscheibe mit einer Windschutzleiste ausgestattet ist, auf der das Gummiblatt angehalten wird, wird das Gummiblatt auf der Windschutzscheibe noch stärker angepreßt, so daß die oben aufgezeigten Probleme noch stärker in Erscheinung treten.

Aus der DE 30 34 051 C3 ist nun ein Scheibenwischer bekannt, bei dem am Wischerarm ein seitlich ausladendes Gleitstück angebracht ist, das im Ruhezustand auf einem auf der Windschutzscheibe oder der Windschutzleiste befestigtes, klotzförmiges Führungsglied so aufsteht, daß das Wischerblatt von seiner aktiven, gegen die Windschutzscheibe oder die Windschutzleiste abgebogen gepressten Zustand so angehoben ist, daß das Wischerblatt mit seiner Wischerkante relativ drucklos auf der Windschutzscheibe bzw. -leiste ansteht. Abgesehen davon, daß bei dieser bekannten Vorrichtung an der Windschutzscheibe bzw. der Windschutzleiste ständig das Führungsglied vorhanden ist, ist außer der negativen optischen Wirkung, auch eine hohe Störanfälligkeit vorhanden. Dies insbesondere bei Reinigungsvorgängen, wenn z.B. mit einem Abstreifer vorhandene Nässe von der Windschutzscheibe abgestreift werden soll, wobei der Abstreifer an dem Führungsklotz hängen bleibt. Auch im Winter, wenn Schnee von der Windschutzscheibe zu räumen ist, wirkt der Führungsklotz hindernd und kann leicht abgerissen werden, wodurch z.B. bei dessen Befestigung über Schrauben an der Windschutzleiste, der Klotz von der Leiste abgerissen und/oder die Leiste insgesamt beschädigt werden. Zudem bleibt das Wischerblatt, wenn auch in relativ entlastetem Zustand, doch in Kontakt mit der Scheibe bzw. der Leiste, so daß die auf die Scheibe bzw. Leiste einwirkenden Witterungsverhältnisse wie sommerliche Hitze oder winterliche Kälte mit Schnee und Eis, voll auf die Gummileiste des Wischerblattes mit einwirken, so daß dieses an der Unterlage festbackt oder festfriert und vorzeitig kaputt geht.

Schließlich wird in der DE-Lit.: "krafthand" - Heft 19, 8. Oktober 1983, Seite 1360 ein Scheibenwischer-Schutz für den Winter beschrieben, der aus einem stabförmigen Distanzstück bzw. -hebel aus Leichtkunststoff besteht, der über sein eines Ende an dem Scheibenwischerarm ein- und ausschwenkbar festgesteckt ist und zwar relativ mittig zu dessen Länge. Dadurch und durch die relativ große Länge des Distanzhebels selbst, wird das Wischerblatt zusammen mit dem Blatthalter so hoch von der Windschutzscheibe abgehoben, daß dieser Zustand sehr augenfällig ist und genau so zum Abbrechen des Scheibenwischer neigt wie ein üblich umgeklappter Scheibenwischer. Zudem verbleibt der Distanzhebel beim Fahren in eingeklapptem Zustand am Scheibenwischerarm, so daß dieser beim Fahren, insbesondere bei großer Geschwindigkeit, einen zusätzlichen, unerwünschten Luftwiderstand ergibt und damit verbundene zusätzliche Vibrationen und Geräusche.

Aufgabe der Erfindung ist es, eine Vorrichtung oben genannter Gattung anzugeben, die bei einfachem, störungsfreiem, leicht handhabbarem Aufbau und Anordenbarkeit ein maximal schonendes Abheben von der Wischfläche der Wischerblätter im Ruhezustand der Scheibenwischer erlaubt.
Diese Aufgabe wird durch eine Vorrichtung mit den Merkmalen des Anspruchs 1 gelöst. Weitere vorteilhafte Ausgestaltungen sind in den Unteransprüchen gekennzeichnet.

Demgemäß ist als Abstützklotz mindestens ein loser, im Ruhezustand des Scheibenwischers von Hand zwischen Windschutzscheibe und Blatthalter einlegbarer Abstützblock vorgesehen, der an seiner Oberseite mindestens einen horizontal bzw. parallel zur Abstützseite herausragenden Abstützarm zum abstützenden Untergreifen des Blatthalters aufweist. Dabei ist selbstverständlich der Abhebeabstand, d.h. der Abstand zwischen Oberseite des Abstützarmes und der unteren Abstützseite so gewählt, daß das Gummiblatt so weit von der Scheibe abgehoben ist, daß es diese nicht berührt. Hierdurch wird erreicht, daß der Scheibenwischer in das Gummiblatt maximal schonender Weise sicher von der Windschutzscheibe abgehoben wird, ohne daß ein während des Fahrens und/oder des Reinigens der Windschutzscheibe hinderliches oder zerstörend wirkendes Element an der Scheibe vorhanden ist. Der Fahrer des Kraftfahrzeugs kann bedarfsweise den "Schoner" abstützend unter den Blatthalter einlegen und diesen vor erneuter Inbetriebnahme des Kraftfahrzeugs wieder leicht, mit einem Handgriff, entfernen und im Inneren des Kraftfahrzeugs verstauen. Dadurch daß die Abhebhöhe des Schoners bedarfsweise auslegbar ist, ist auch die Abhebhöhe des Blatthalters so auslegbar, daß das Gummiblatt sicher, vorzugsweise mindestens 1 mm von der Unterlage abgehoben zu stehen kommt. Dadurch wird ein Anfrieren des Scheibenwischergummis an der Windschutzscheibe bei Frost und Schnee verhindert, Tauwasser kann ungehindert ablaufen und zudem kann ein Ankleben des Gummis durch Hitze (Sonneneinstrahlung) sicher verhindert werden. Durch seine Entlastung von der Windschutzscheibe wird das Gummiblatt und auch die Federung des Wischers geschont. Somit wird die Qualität des Gummiblattes erhalten und dessen Lebensdauer insgesamt verlängert.

In einer vorteilhaften Weiterbildung des Erfindungsgedankens weist der mindestens eine Abstützbock eine C- bzw. liegende U-Form auf, wobei der am (in aufliegendem Zustand) im wesentlichen vertikalen Basis-Körper untere Schenkel als Auflageam oder -kufe und der obere Schenkel als Abstützarm dient. Der somit im wesentlichen C- bzw. U-förmige bzw. im weitesten Sinne hufeisenförmige "Schoner" wird dabei so zum Einsatz gebracht, daß der Benutzer mit der einen Hand den Scheibenwischer anhebt und den Schoner derart zwischen Windschutzscheibe und Blatthalter des Scheibenwischers einlegt, daß er den oberen Abstützarm des Schoners zwischen Blatthalter und Wischerblatt einschiebt und den Schoner über den Abstützarm bzw. den Auflagearm auf der Windschutzscheibe aufliegend abstützt. Danach wird er den Scheibenwischer freigeben, so daß sich der Blatthalter quer verlaufend auf der Oberseite des Abstützarmes aufliegend auf diesem abstützt. Der Blatthalter mit dem daran befestigten Gummiblatt hängt dann völlig entlastet am Blatthalter, so weit angehoben, daß das Gummiblatt mit seiner Abstreifleiste die Unterlage nicht berührt. Bei Entfernen des Schoners muss der Benutzer lediglich den Scheibenwischer bzw. den Blatthalter etwas anheben, wonach er den Schoner einfach unter diesem herausziehen und wegräumen kann.

Vorteilhaft ist, wenn der mindestens eine Abstützarm an seiner Oberseite eine Querprofilierung in Form von Riffelungen oder Rippen aufweist. Dadurch wird verhindert, daß der Blatthalter vom Abstützarm abrutscht, insbesondere wenn der Scheibenwischerschoner von der Windschutzscheibenseite her leicht schräg stehend eingeschoben ist.

Dabei kann der Abstützarm nur an seinem äußeren Ende eine nach oben weisende Querrippe in Form z.B. einer Aufbiegung aufweisen, zum einhängenden Eingreifen in den U-förmigen Blatthalter.

Von Vorteil ist, wenn der Abstand zwischen Abstützarm und Auflagearm, also die Abstützhöhe, verstellbar ist. Dabei kann diese Höhenverstellbarkeit in an sich bekannter Weise durch teleskopische Ausbildung des Körpers in Verbindung mit an sich bekannten Rastierungen oder Steckeinrichtungen ausgeführt sein. Hierdurch ist sichergestellt, daß stets die optimale Abstützhöhe vorhanden ist, unabhängig von der Scheibenwischerart bzw. -größe.

Die erfindungsgemäße Vorrichtung kann in vorteilhafter Weise auch so ausgebildet sein, daß am vertikalen Körper jeweils zwei horizontal voneinander beabstandete Aufliegearme und Abstützkufen vorgesehen sein. Dadurch wird im weitesten Sinne eine Zweipunktabstützung erreicht, so daß der mittig in den Blatthalter eingreifende Scheibenwischerarm nicht störend bei der Auflage bzw. Abstützung wirkt.

Positiv wirkt sich auch aus, wenn die beiden Auflagearme um eine zu ihrer Längserstreckung parallele Achse schwenkbar an den Bockkörpern angeordnet sind. Hierdurch erfolgt ein Ausgleich von eventuellen Unebenheiten, verursacht z.B. durch Verunreinigungen der Kufen durch Querverschwenken, die immer ausgeglichen werden.

Von besonderem Vorteil ist, wenn als Abstützklotz zwei Abstützböcke vorgesehen sind, die über einen schmäleren Quersteg miteinander verbunden sind. Hierdurch wird insbesondere eine leichtere Ausführungsform erreicht. Wird dann der Quersteg in an sich bekannter Weise längenverstellbar ausgelegt, z.B. durch Teleskopausbildung in Verbindung mit Rastierungs-, Steck- oder Klemmeinrichtungen, dann besteht eine optimale Anpassbarkeit auch in Quererstreckung der Vorrichtung. Die beiden Abstützarme sind somit bedarfsweise auf optimalen Abstand zueinander bringbar, je nach Scheibenwischerart. Auch kann die Verschiebbarkeit so ausgelegt werden, daß bei Nichtgebrauch die beiden Arme möglichst nahe zueinander geschoben werden können, so daß dann die Vorrichtung leichter verstaubar ist.

Dabei kann die Teleskopausbildung so vorgenommen werden, daß an dem einen Bock ein hülsenförmiger Teil angebracht ist, während der andere Bock einen in der Hülse laufenden Profilstab trägt. Es kann aber auch nur an dem einen Bock ein sich quer erstreckender Profilstab vorgesehen sein, der durch eine entsprechende Profilöffnung im zweiten Bock verschiebbar quer hindurchreicht. Im letzten Fall kann dann der zweite Bock auf der Profilstange bis auf Anlage an den ersten Bock herangeschoben werden, wodurch eine bessere Verstaubarkeit erreicht wird.

Als Längen verstellbarer Quersteg kann in vorteilhafter Weise auch ein an sich bekannter Scherenarm zum Einsatz kommen. Dabei können die beiden Enden des Scherenarms jeweils an einem Abstützbock-Körper, z.B. an der Körperinnenseite, angeordnet sein. Die Körper der beiden Abstützböcke können auch an der jeweilig einander gegenüberliegenden Seite geeignet große Querausnehmungen aufweisen, in denen die Enden der Scherenarme entsprechend tief befestigt sind, so daß in aneinander zusammengedrücktem Zustand der beiden Böcke der ganz zusammengeschobene Scherenarm in den beiden gehäuseförmigen Ausnehmungen der Böcke komplett eingeschoben ist, so daß die beiden Böcke innenseitig aneinander liegen. Es ist ersichtlich, daß dadurch ein maximal Platz sparende Verstauungsmöglichkeit erreicht wird. Selbstverständlich können noch, um beim Verstauen ein ungewolltes gegeneinander Verdrehen der beiden Böcke und damit ein Verwinden und Zerstören des Scherenarmes zu verhindern, Führungs- und Rastierungselemente, wie Führungsstift und Führungsbohrung an den Innenseiten vorgesehen sein.

Auch ist noch von Vorteil, wenn die Auflagearm- bzw. Kufenunterseiten bzw. deren Auflageflächen in Längs- und/oder Querrichtung stark gerippt bzw. mit Rillen versehen sind, so daß Regen- oder Tauwasser problemlos abrinnen kann.

Des weiteren ist von besonderem Vorteil, wenn nur ein, relativ schmaler Abstützbock vorgesehen ist, der vorzugsweise, im Verhältnis zur Schwenkachse des Blatthalters, unter die Scheibenwischerarm-Seite des Blatthalters und zwar relativ nahe an der Schwenkachse, abstützend eingeschoben wird. Dieser schmale Abstützbock, der aus einem Blechband oder einer Drahtlasche gebogen sein kann, kann eine Breite von ca. 10 bis 25 mm, eine Abstützarm-Länge von ca. 5 bis 15 mm und eine Auflagearm-Länge von ca. 30 bis 60 mm aufweisen. Vorzugsweise hat er eine Breite von ca. 15 mm, eine Abstützarm-Länge von ca. 10 mm und eine Auflage-Länge von ca. 45 mm.

Nachfolgend wird die Erfindung an Hand mehrerer Ausführungsbeispiele unter Bezug auf die Zeichnung näher erläutert.

Es zeigt:
- Fig. 1:: eine Perspektivansicht einer Vorrichtung mit einem einteiligen Abstützbock,
- Fig. 2:: einen Schnitt durch den Abstützbock aus Fig. 1, in einem den Scheibenwischer abgehoben abstützenden Zustand,
- Fig. 3:: eine Perspektivansicht einer Vorrichtung in zweiter Ausführung, mit einteiligem Abstützbock, mit zwei zueinander beabstandeten Auflage- und Abstützarmen und mit Einhänge-Querrippen an den Abstützarmen,
- Fig. 4:: eine Seitenansicht mit teilweisem Schnitt durch eine Vorrichtung nach Fig. 3, mit in abgehobener Stellung eingehängtem Scheibenwischer,
- Fig. 5:: eine Perspektivansicht einer Vorrichtung in dritter Ausführung, mit zwei Abstützböcken, verbunden mit einem Scherenarm,
- Fig. 6:: eine Perspektivansicht des linken Abstützbockes aus Fig. 5, in Ausführung mit hohlem Basiskörper und in diesen einschiebbarem Scherenarm,
- Fig. 7:: eine Perspektivansicht auf eine weitere Ausführungsform mit zwei Böcken, verbunden über eine Teleskop-Querstange und höhenverstellbaren Körpern,
- Fig. 8:: eine Ansicht einer Vorrichtung nach Fig. 7 in einem den Scheibenwischer abhebenden Zustand,
- Fig. 9:: einen Längsschnitt durch eine Vorrichtung in Ausführung ähnlich wie in Fig. 7, jedoch mit verschieblicher Querstange,
- Fig. 10:: eine Perspektivansicht einer weiteren Ausführungsform eines Abstützbockes, mit stabförmigem Körper und Abstützarm,
- Fig. 11:: eine Seitenansicht eines Abstützbockes in Ausführung ähnlich wie aus Fig. 10, jedoch mit höhenverstellbarem Abstützarm,
- Fig. 12:: einen Abstützbock in weiterer Ausführungsform, geformt aus einem Blechstreifen, mit kurzem Abstützarm,
- Fig. 13:: einen Abstützbock in Grundform ähnlich wie aus Fig. 11, jedoch in Draht-Ausführung,
- Fig. 14:: einen Abstützbock wie in Fig. 13, mit plattenförmigem Verstärkungskörper, und
- Fig. 15:: einen vertikalen Schnitt durch einen Abstützbock nach Fig. 12 bis 14, in eingesetztem Zustand.

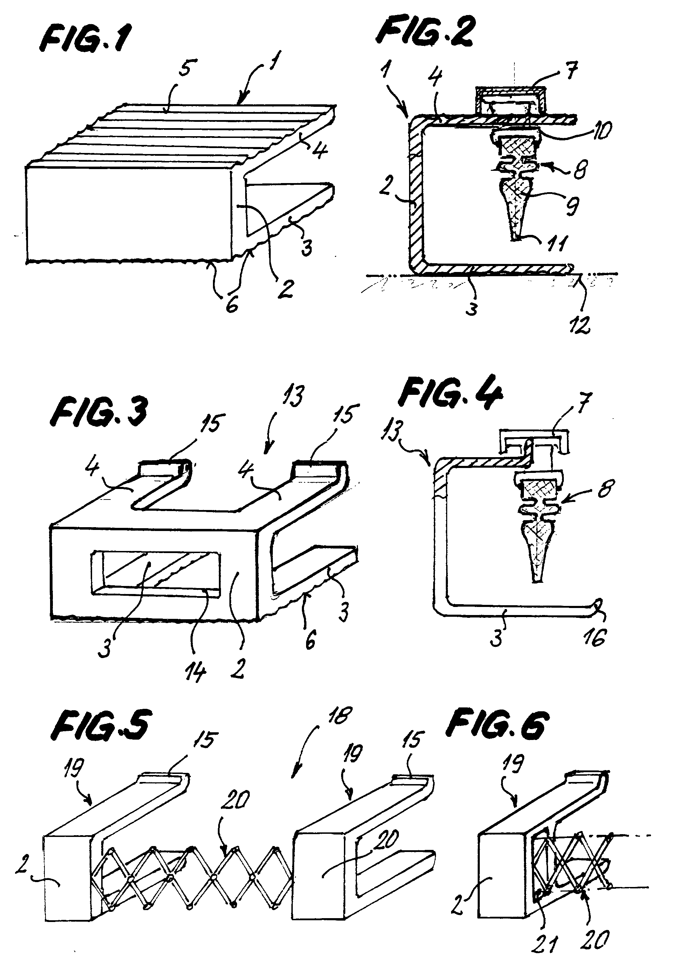

Wie insbesondere aus Fig. 1 zu entnehmen ist, besteht die erfindungsgemäße Vorrichtung in erster Ausführung aus nur einem Abstützbock 1, der eine C- bzw. eine liegende U-Profil-Form aufweist. Dabei ist an einem vertikal ausgerichteten Basis-Körper 2 ein horizontaler unterer Auflagearm 3 und ein horizontaler oberer Abstützarm 4 vorgesehen. Der obere Abstützarm 4 weist quer zur Armerstrekkung eine Riffelung 5 auf, während an der unteren Auflageseite des Auflagearmes 3 Längs- und/oder Quer-Riffelungen 6 vorgesehen sind. Dabei können als Riffelung 6 auch nur zwei Längsrippen vorgesehen sein oder der Auflagearm als nach unten offenes U-Profil mit relativ kurzen Schenkeln ausgebildet sein. Dadurch ist eine gute ggf. lineare Auflage mit maximaler Tauwasser-Durchlässigkeit vorhanden.

In Fig. 2 ist zu erkennen, wie auf der Oberseite des Abstützarmes 4 des Abstützbockes 1 der U-förmige Blatthalter 7 eines Scheibenwischers, über seine beiden Schenkel aufliegend, abgestützt ist. Dabei reicht der Abstützarm 4 zwischen Blatthalter 7 und Wischerblatt 8 mit daran vorgesehenem Gummiblatt 9 hindurch, so daß die Wischerfederung 10 komplett entlastet ist. Es ist zu erkennen, daß die Abstreifleiste 11 des Gummiblattes 9 in diesem "aufgebockten" Zustand von der Oberseite des Auflagearmes 3 und damit von der Oberfläche der Windschutzscheibe 12 beabstandet ist.

Die dem in Fig. 3 dargestellten, einteiligen Abstützbock 13 sind am Basis-Körper 2, der eine Erleichterungsöffnung 14 aufweist, zwei zueinander beabstandete Auflagearme 4 und zwei ebenfalls zueinander entsprechend beabstandete Auflagearme 3 vorgesehen. Am jeweilig vorderen Ende der Abstützarme 4 ist eine nach oben, abgewinkelt sich erstreckende Einhängerippe 15 vorgesehen, wie auch aus Fig. 4 gut erkennbar ist. Insbesondere aus Fig. 4 ist erkennbar, daß der Abstützarm 4 über seine Einhängerippe 15 von unten her in das U-Profil des Blatthalters 7 so eingreift, daß der Blatthalter 7 über die Basis seines U-Profils auf der Oberkante der Einhängerippe 15 aufliegt. Hierfür ist die Höhe der Einhängerippe 15 so ausgelegt, daß sie größer ist als die innere Höhe der Schenkel des Blatthalter-Profils, so daß die Schenkel des Blatthalters nicht auf der Oberseite des Abstützarmes 4 aufstehen. Zudem ist aus dieser Figur zu erkennen, daß hier die Abstützarme 4 bedeutend kürzer ausgelegt sind als die Auflagearme 3, die zur leichteren Einlegbarkeit bzw. zur Vermeidung von Kratzern, eine Aufbiegung 16 aufweisen.

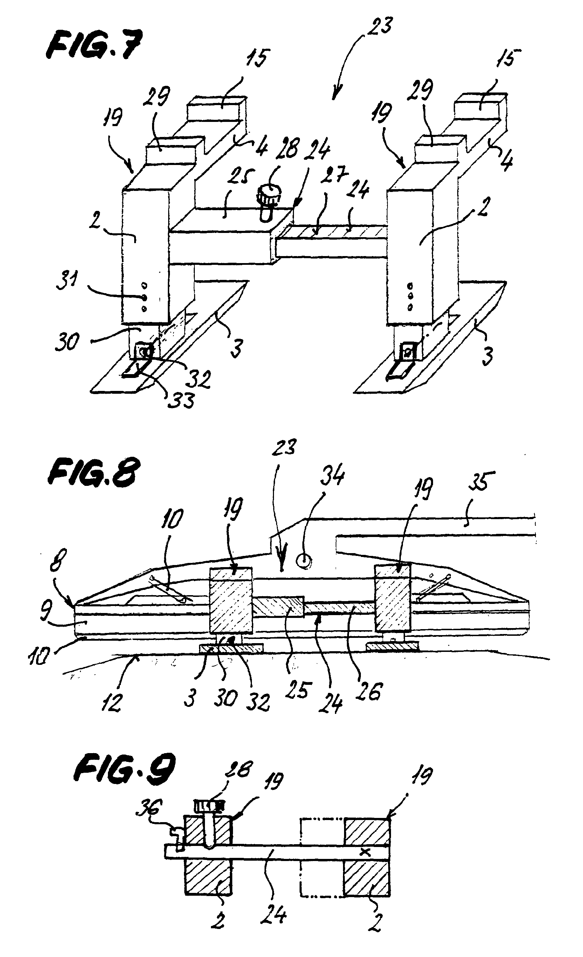

Die in Fig. 5 dargestellte Vorrichtung 18 besteht aus zwei Abstützböcken 19, die jeweils ähnlich aufgebaut sind wie die Vorrichtung aus Fig. 3, also an der Vorderseite des oberen Abstützarmes Einhängerippen 15 aufweisen, wobei die beiden Abstützböcke 19 über einen Scherenarm 20 miteinander verbunden sind. Es ist erkennbar, daß durch den Scherenarm 20, je nachdem wie weit dieser auseinandergezogen oder zusammengedrückt wird, der Abstand zwischen den beiden Abstützböcken 19 verändert werden kann, wodurch auch die Abstützpunkte der Einhängerippen 15 mehr oder weniger nahe aneinander geführt werden können. Die Körper 2 der Abstützfläche 19 können, in nicht dargestellter Weise, höhenverstellbar sein, in dem z.B. dieser längs-zweigeteilt, sich überlappend ausgebildet ist. D.h., die Abstützböcke bestehen aus zwei L-Profilen, die über einen Schenkel so aneinanderliegen, daß ein U-Profil entsteht. Durch entsprechende Längsführung und z.B. Langloch in Verbindung mit einer Klemmschraube können die beiden Teile zu einem mehr oder weniger weiten U-Profil verstellt werden.

In Fig. 6 ist nur einer der beiden Abstützböcke 19 dargestellt, wobei zu erkennen ist, daß dessen Basis-Körper 2 in Art eines Gehäuses ausgebildet ist, mit einer nach innen bzw. in Richtung auf den zweiten, nicht dargestellten Abstützbock, weisenden Gehäuseöffnung 21. In diesen Gehäuseöffnungen 21 ist jeweils das eine Ende des Scherenarmes 20 so befestigt, daß bei komplettem Zueinander-Heranführen der beiden Abstützböcke 19 der Scherenarm 20 komplett in den Gehäuseöffnungen 21 der spiegelbildlich ausgebildeten Abstützböcke 19 eingeschoben wird.

Fig. 7 zeigt die Vorrichtung in vierter Ausführungsform 23, bei der ebenfalls zwei zueinander beabstandete Abstützböcke 19 vorgesehen sind. Hier sind die beiden Abstützböcke 19 über einen Quersteg 24 verbunden, der teleskopisch Längen veränderbar ist. Dafür ist der Quersteg 24 aus einer am ersten Abstützbock 19 vorgesehenen Hülse 25 und einem am zweiten Abstützbock 19 befestigten, in der Hülse 25 längsverschiebbaren Profilstab 26 zusammengesetzt. An der Oberseite des Profilstabes 26 ist eine Profilierung, z.B. Querriefen oder zueinander beabstandete Vertiefungen oder Löcher vorgesehen, die mit einer nicht dargestellten Indexiereinrichtung wie Federkugel oder mit einer von Hand bedarfsweise betätigbaren Fixierschraube 28 zusammenarbeiten. Der Quersteg kann aber auch aus mehreren, teleskopisch ineinander verschiebbaren Teilen bestehen und so an den Körpem 2 befestigt sein, daß bei dessen komplettem Zusammendrükken, ähnlich wie bei dem Federarm 20 aus Fig. 5 und 6, der Steg ganz in den Körper 2 einläuft und die Körper aneinander zu liegen kommen.

In dieser Ausführungsform weist der obere Abstützarm 4 der Abstützböcke 19 an seinem jeweiligen äußeren Ende ebenfalls eine Einhängerippe 15 auf, wobei weiter einwärts jeweils noch eine zusätzliche Einhängerippe 29 vorgesehen ist. Die beiden Rippen 19 und 29 sind so weit voneinander beabstandet, daß der zwischen ihnen gebildete Zwischenraum größer ist als die Breite des Blatthalters 7. Somit kann der Blatthalter 7 entweder auf der äußeren Einhängerippe 15 oder auf der inneren Einhängerippe 29 eingehängt abgestützt werden, oder zwischen den beiden Rippen 19, 29 auf der Oberseite des Armes 4 aufliegend abgestützt werden, wobei dann die beiden Rippen 15, 29 ein Abrutschen des Blatthalters sicher in beiden Richtungen verhindern.

Die Basiskörper 2 sind in der Ausführungsform nach Fig. 7 ebenfalls Höhen verstellbar ausgebildet und zwar dadurch, daß die Basiskörper 2 eine nicht dargestellte Längs-Profilöffnung aufweisen, in der jeweils eine Profilstütze 30 längsverschiebbar angeordnet ist. Die jeweilige Relativposition der beiden Teile 2 und 30 zueinander wird über an sich bekannte, nicht dargestellte Rastiereinrichtungen oder mit Hilfe von Stecklöchern 31 in Verbindung mit nicht dargestellten Steckstiften vorgenommen.

Die Auflagearme 4 der Abstützböcke 19 sind hier als beidseitig ausladende Auflagekufen ausgebildet, die jeweils über eine in Armlängserstreckung ausgerichtete Schwenkachse 32 an der Unterseite der Profilstütze 30 angebracht sind. Die Schwenkverbindung kann dabei in unterschiedlicher, an sich bekannter Weise erreicht werden, nämlich durch eine Schwenkachse 32 in Verbindung mit zwei L-förmigen Lagerböcken, die an den Kufen 4 befestigt sind, oder durch an der Unterseite der Profilstützen 30 herausgearbeitete Lagerböcke in Verbindung mit einem an den Kufen 4 vorgesehene Lagerauge oder umgekehrt, an den Kufen vorgesehenen Lagerböcken und einem Profilstützen-Lagerauge, die dann aber insgesamt nicht breiter sind als die Profilstütze 30.

Aus Fig. 8 ist zu erkennen, wie mit Hilfe der in Fig. 7 dargestellten Vorrichtung 23 ein Scheibenwischer über dessen Blatthalter 7 abgestützt wird. Dabei ist zu ersehen, daß der Quersteg 24 durch entsprechendes Verschieben der Hülse 25 und des Profilstabes 26 in seiner Länge so fixiert ist, daß die beiden Abstützböcke 19 in optimaler Beabstandung zur Angriffsachse 34 des Scheibenwischerarmes 35 abstützend am Blattfederhalter 7 wirken. Dabei hängt das Wischerblatt 8 komplett entlastet über die Wischerfederung 10 am Blatthalter 7 und zwar so, daß die untere Kante der Abstreifleiste 11 des Gummiblattes 9 in der Höhe mit einigem Abstand von der Oberseite der Abstützarme 4 hängt.

Fig. 9 zeigt eine weitere Querverstellbarkeit des Abstandes der beiden Abstandsböcke 19, wobei diese beiden Böcke z.B. diejenigen der Ausführungsform nach Fig. 7 sein können. Der Quersteg 24 ist hier als Profilstab ausgebildet, der einerseits fest am rechten Abstützbock festgehalten ist, während er durch eine entsprechende Profilöffnung des zweiten Abstützbockes 19 querverschieblich hindurchreicht. Ebenso wie bei der Ausführunngsform nach Fig. 7 kann der Abstand zwischen den beiden Abstützböcken 19 über eine Profilierung der einen Seite des Quersteges 24 in Verbindung mit im zweiten, verschiebbaren Abstützbock 19 angeordneten Indexiereinrichtung oder Fixiereinrichtung, z.B. einer Stellschraube 28. Zusätzlich zu einer Federkugel zum Positionsfestlegen des verschiebbaren Abstützbockes auf dem Quersteg 24 kann ein Positionsstift 36 vorgesehen sein, der - je nach optimalem Abstand zwischen den beiden Abstützböcke - in den Quersteg wahlweise einsteckbar ist und als Längsanschlag beim Auseinanderschieben, vor Einlegen unter den Scheibenwischer bzw. dessen Blatthalter 7, dient. Bei Nichtgebrauch wird der linke Abstützbock auf dem Quersteg 24 ganz nach rechts, bis auf Anlage an den ersten Abstützbock geschoben, wie in unterbrochener Linie eingezeichnet, während vor In-Gebrauchnahme der zweite Abstützbock aus seiner Anlageposition nach links, bis auf Anschlag auf den entsprechend voreingestellten Positionsstift 36 verschoben wird.

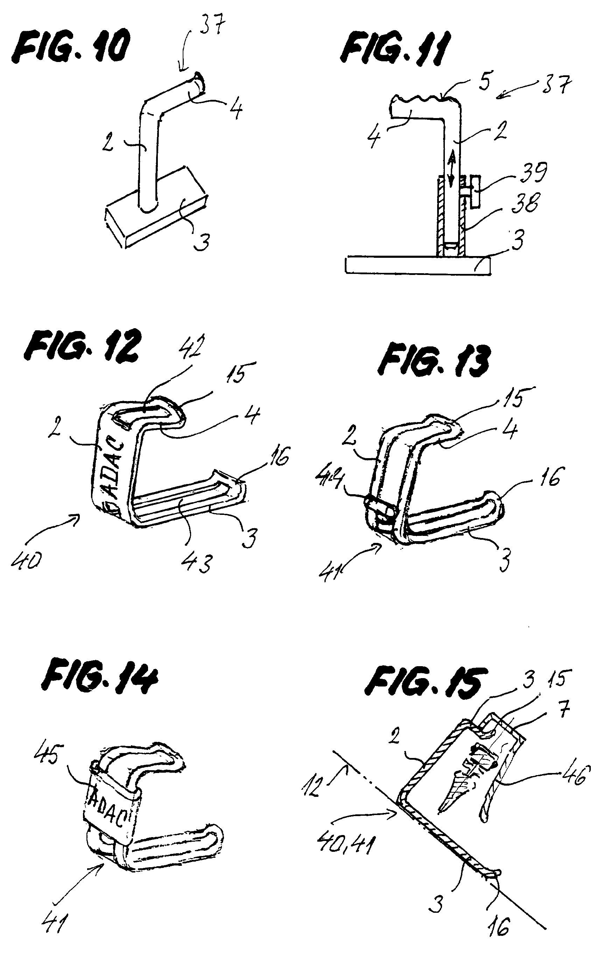

In den Fig. 10 und 11 ist eine Ausführungsform dargestellt, von denen man als Galgen-Ausführung sprechen kann. Es ist jeweils als Abstützarm 3 eine Platte vorgesehen, an der ein L-förmig gebogener Profilstab, z.B. Rundstab oder Vierkantstab, als Körper 2 und Abstützarm 4 befestigt ist. Bei der Ausführungsform nach Fig. 11 erfolgt die Befestigung höheneinstellbar und zwar mit Hilfe einer am Auflagearm angebrachten Hülse 38, in der der Körper 2 achsverschieblich und über eine Arretierschraube 39 positionsfixierbar ist.

Die in Fig. 12 bis 15 dargestellten Ausführungsbeispiele weisen die gleiche Grundform auf, nämlich relativ schmale Bandform, mit relativ kurzem Abstützarm im Verhältnis zur Auflagearm-Länge. Die Armlängen, insbesondere die Kürze des oberen Abstützarmes sind dadurch bedingt, daß der Abstützbock von oben her unter den Blatthalter eingelegt wird und nicht von unten her, wie insbesondere bei den aus Fig. 1 bis 7 ersichtlichen Beispielen. Dadurch muß der Auflagepunkt des Federblattes 7 auf dem Abstützarm 3 möglich nahe am Körper 2 liegen, um eine gute Abstützung des erzeugten Moments zu erhalten.

Der Abstützbock 40 nach Fig. 12 ist aus bandförmigem Material gebildet, z.B. aus einem Blechstreifen oder ist ein entsprechendes Kunststoff-Spritzgußteil. Abgesehen von der oberen Einhängerippe 15 und der unten Aufbiegung 16 sind hier noch längliche Ausnehmungen 42 und 43 eingebracht, wobei erste zur angenäherten Punkt-Auflage und die Ausnehmung 43 zur Reduzierung der Auflagefläche und gleichzeitig Bereitstellung rippenähnlicher Auflageteile, die durch die kanalförmige Ausnehmung ein Abfließen von Wasser erlauben. Am Rücken des Körpers 2, der im wesentlichen vollem Bandmaterial besteht, kann in vorteilhafter Weise Aufschriftungen aufgebracht werden.

Bei der in Fig. 13 und 14 dargestellten Ausführungsform ist der Abstützbock 41 aus einer Drahtlasche gebildet, wobei der Draht im wesentlichen in Form der Kontur des Abstützbockes 40 aus Fig. 12 geführt ist. Eine Querstrebe 44 sorgt für höhere Stabilität des Körperteiles.

Die Ausführungsform aus Fig. 14 ist im wesentlichen die Gleiche wie in Fig. 13, nur daß hier ein Verbindungskörper 45 vorgesehen ist, durch den eine höhere Stabilität erreicht wird und der zudem optimal als Werbeträger dienen kann. Bei dieser Ausführungsform kann auch gedacht werden, den Abstützbock nicht aus einer einzigen, geschlossenen Lasche C-förmig zu biegen, sondern zwei Laschenteile zu fertigen, die über ihre beiden freien Enden in entsprechende Bohrungen des Verbindungskörpers 45 fest eingesteckt werden.

Schließlich zeigt Fig.15, wie ein Abstützbock 40, 41 nach Fig. 12 bis 14 auf einer Windschutzscheibe 12 über seinen Auflagearm 3 aufliegt und unter den Blatthalter 7 von oben her so eingelegt ist, daß er über den kurzen Abstützarm 4 und dessen Einhängerippe 17 abgestützt ist. Ein Abstützen von unten her ist wegen der an den Scheibenwischer-Blatthalter mancher PKW's vorgesehenen Windabweisern 46 nicht möglich.

### Bezugszeichenliste

- 1.: Abstützbock, 1te Ausführung
- 2.: Basis-Körper
- 3.: Auflagearm / -kufe
- 4.: Abstützarm
- 5.: Riffelung, obere
- 6.: Riffelung, untere
- 7.: Blatthalter
- 8.: Wischerblatt
- 9.: Gummiblatt
- 10.: Wischerfederung
- 11.: Abstreifleiste
- 12.: Windschutzscheibe
- 13.: Abstützbock, 2te Ausführung
- 14.: Erleichterungsöffnung
- 15.: Einhängerippe
- 16.: Aufbiegung
- 17.: -
- 18.: Vorrichtung, 3te Ausführung
- 19.: Abstützbock
- 20.: Scherenarm
- 21.: Gehäuseöffnung
- 22.: -
- 23.: Vorrichtung, 4te Ausführung
- 24.: Quersteg
- 25.: Hülse
- 26.: Profilstab
- 27.: Profilierung
- 28.: Fixierschraube
- 29.: Einhängerippe
- 30.: Profilstütze
- 31.: Stecklöcher
- 32.: Schwenkachse
- 33.: Lagerböcke
- 34.: Angriffsachse
- 35.: Scheibenwischerarm
- 36.: Positionsstift
- 37.: Abstützbock
- 38.: Hülse
- 39.: Arretierschraube
- 40.: Abstützbock, 6te Ausführung
- 41.: Abstützbock, 7te Ausführung
- 42.: Ausnehmung
- 43.: Ausnehmung
- 44.: Querstrebe
- 45.: Verbindungskörper
- 46.: Windabweiser

## Patentansprüche

1. Vorrichtung zum Abstützen von Kfz-Scheibenwischern mit einem Abstützklotz, der auf der Windschutzscheibe oder Windschutzleiste aufsteht und über seine Oberseite den Wischerblatthalter in senkrecht zur Auflagefläche des Abstützklotzes abgehobenem Zustand abstützt,
**dadurch gekennzeichnet,**
**daß** als Abstützklotz mindestens ein loser, von Hand zwischen Windschutzscheibe (12) und Blatthalter (7) einlegbarer Abstützbock (1, 13, 19) vorgesehen ist, der an seiner Oberseite mind. einen horizontal bzw. parallel zur Auflageseite (3) herausragenden Abstützarm (4) zum Untergreifen des Blatthalters (7) aufweist, wobei der Abstand zwischen Oberseite des Abstützarmes (4) und der unteren Auflageseite (3) so gewählt ist, daß das Gummiblatt (9) des Scheibenwischers so weit abgehoben ist, daß es mit seiner Unterkante die Scheibe (12) bzw. die Auflagearme (3) nicht berührt.

2. Vorrichtung nach Anspruch 1,
**dadurch gekennzeichnet, daß** der mind. eine Abstützbock (1, 13, 19) im wesentlichen eine C- bzw. eine liegende U-Form aufweist, wobei der am Basiskörper (2) untere Schenkel als Auflagearm (3) und der obere Schenkel als Abstützarm (4) dient.

3. Vorrichtung nach Anspruch 2,
**dadurch gekennzeichnet, daß** der Abstützarm (4) an seiner Oberseite eine Querprofilierung in Form von z.B. Riffelungen (5) oder Rippen (15, 29) aufweist.

4. Vorrichtung nach Anspruch 2,
**dadurch gekennzeichnet, daß** der Abstützarm (4) an seinem äußeren Ende eine nach oben weisende Einhänge-Rippe (15) aufweist.

5. Vorrichtung nach Anspruch 2,
**dadurch gekennzeichnet, daß** der Abstand zwischen Abstützarm (4) und Auflagearm (3) verstellbar ist, wobei diese Höhenverstellbarkeit in an sich bekannter Weise durch teleskopische Ausbildung des Körpers (2, 30) in Verbindung mit Rastierungen oder Steckeinrichtungen (31) ausgeführt ist.

6. Vorrichtung nach Anspruch 1,
**dadurch gekennzeichnet, daß** am Körper (2) je zwei voneinander beabstandete Auflagearme (3) und Abstützarme (4) vorgesehen sind.

7. Vorrichtung nach Anspruch 2,
**dadurch gekennzeichnet, daß** die Auflagearme (3) als quer zu ihrer Längserstreckung schwenkbar an dem Bock-Körper (2) angeordnete Kufen (4) ausgebildet sind.

8. Vorrichtung nach Anspruch 1,
**dadurch gekennzeichnet, daß** zwei Abstützböcke (19) vorgesehen sind, die über einen Quersteg (20, 24) miteinander verbunden sind.

9. Vorrichtung nach Anspruch 8,
**dadurch gekennzeichnet, daß** der Quersteg in an sich bekannter Weise Längen verstellbar ist, z.B. durch Teleskop-Ausbildung (24, 25, 26) in Verbindung mit Rastierungs-, Steck- oder Klemmeinrichtungen, oder durch verschiebliches Hindurchführen durch einen der Körper.

10. Vorrichtung nach Anspruch 9,
**dadurch gekennzeichnet, daß** der Quersteg ein Scherenarm (20) ist.

11. Vorrichtung nach Anspruch 10,
**dadurch gekennzeichnet, daß** die Bock-Körper (2) jeweils eine Quer-Gehäuseöffnung (21) aufweisen, in denen je ein Ende des Scherenarmes (20) befestigt ist und in die der Scherenarm (20) in zusammengedrücktem Zustand zumindest teilweise, vorzugsweise ganz aufgenommen ist, so daß die beiden Abstützböcke (19) in aneinander anliegenden Zustand bringbar sind.

12. Vorrichtung nach Anspruch 1,
**dadurch gekennzeichnet, daß** der Auflagearm (3) an seiner Unterseite stark gerippt ist bzw. Quer- und/oder Längs-Riffelungen (6) aufweist.

13. Vorrichtung nach Anspruch 1,
**dadurch gekennzeichnet, daß** der Abstützbock (37) als Auflagearm (3) eine Platte und als Körper (2) und Abstützarm (4) einen L-förmig gebogenen Profilstab bestitzt.

14. Vorrichtung nach Anspruch 2,
**dadurch gekennzeichnet, daß** nur ein schmaler Abstützbock (19 bzw. 37, 40, 41) vorgesehen ist, mit einer Breite von ca. 10 bis 25 mm, vorzugsweise 15 mm, wobei der Abstützarm (4) eine Länge von ca. 5 bis 15 mm, vorzugsweise 10 mm und der Auflagearm (3) eine Länge von ca. 30 bis 60 mm, vorzugsweise ca. 45 mm aufweist.

15. Vorrichtung nach Anspruch 14,
**dadurch gekennzeichnet, daß** der Abstützbock (40) aus einem Blechband geformt bzw. gebogen ist.

16. Vorrichtung nach Anspruch 14,
**dadurch gekennzeichnet, daß** der Abstützbock (41) aus einem Draht in Form einer C-förmig gebogenen Lasche gefertigt ist, wobei dieser Draht im wesentlichen die gleiche Führung wie die Außenkontur/Kanten des Blechband-Bockes (40) aufweist.
